# EUROPEAN PATENT APPLICATION

(11) **EP 3 407 316 A2**
(43) Date of publication of application: **28.11.2018**
(21) Application number: 18174372.5
(22) Date of filing: 25.05.2018
(51) Int. Cl.: G08B 21/02

(54) **INDIVIDUAL TRACKING SYSTEM AND NOTIFICATION METHOD**

(30) Priority: 25.05.2017 JP 2017103420
(71) Applicant: Toshiba TEC Kabushiki Kaisha, Tokyo 141-8562 (JP)
(72) Inventor: HASEGAWA, Keiichi, Shinagawa-ku,, Tokyo 141-8562 (JP)
(74) Representative: Takeuchi, Maya

(57) **Abstract**

A tracking system includes a plurality of point-of-sale (POS) terminals distributed across a number of different locations, and a server connected to the POS terminals and having a processor configured to determine a location of a tracked person as a location of at least one of the POS terminals that processed a transaction by the tracked person, and to send a notification to a notification destination corresponding to the tracked person, the notification including the determined location of the tracked person.

## Description

### FIELD

The present invention relates to the field of an individual tracking technology in general, and embodiments described herein relate in particular to an individual tracking system and notification method.

### BACKGROUND

A system for tracking a target person, such as a child or an elderly person is known.

However, in such kind of system, it is necessary for the target person to carry a special device such as a Global Positioning System (GPS) terminal in order to be able to track such a person. That is, it is not possible to track the target person without the device being carried by the target person.

Thus, it is desirable to have a system in which it is possible to track the target person even when the target person does not carry the device.

To solve such problem, there is provided a tracking system comprising: a plurality of point-of-sale (POS) terminals distributed across a number of different locations; and a server connected to the POS terminals and having a processor configured to determine a location of a tracked person as a location of at least one of the POS terminals that processed a transaction by the tracked person, and to send a notification to a notification destination corresponding to the tracked person, the notification including the determined location of the tracked person.

Preferably, the notification is sent to the notification destination using a push notification.

Preferably still, the notification is sent to the notification destination by e-mail.

Preferably yet, the processor is configured to generate a history of determined locations for the tracked person, the notification includes the history of the determined locations for the tracked person.

Suitably, the processor is configured to generate the history of the determined locations for the tracked person as an image including a map and graphics indicating a path of the tracked person.

Suitably still, the server is an electronic receipt server.

Suitably yet, the electronic receipt server specifies one or more user IDs of individuals who are to be tracked, and associates a notification destination for each of the user IDs.

Typically, the electronic receipt server maintains a setting for each of the specified user IDs that indicates whether or not the notification is to be made in real-time or not.

Typically still, the notification includes a first notification that includes a message indicating a current location of the tracked person and a second notification that includes an image including a map and graphics indicating the current location of the tracked person.

Typically yet, the first notification is displayed at the notification destination with a selectable element, which when selected causes the second notification to be displayed at the notification destination, and the second notification is displayed at the notification destination with a selectable element, which when selected, causes the first notification to be displayed at the notification destination.

The invention also relates to a notification method in a tracking system comprising a plurality of point-of-sale (POS) terminals distributed across a number of different locations, and a server connected to the POS terminals, said method comprising: determining a location of a tracked person as a location of at least one of the POS terminals that processed a transaction by the tracked person; and sending a notification to a notification destination corresponding to the tracked person, the notification including the determined location of the tracked person.

Preferably, in the method, the notification is sent to the notification destination using a push notification.

Preferably still, in the method, the notification is sent to the notification destination by e-mail.

Preferably yet, the method further comprises: generating a history of determined locations for the tracked person, wherein the notification includes the history of the determined locations for the tracked person.

Suitably, in the method, the history of the determined locations for the tracked person is generated as an image including a map and graphics indicating a path of the tracked person.

Suitably still, in the method, the server is an electronic receipt server.

Suitably yet, in the method, the electronic receipt server specifies one or more user IDs of individuals who are to be tracked, and associates a notification destination for each of the user IDs.

Typically, in the method, the electronic receipt server maintains a setting for each of the specified user IDs that indicates whether or not the notification is to be made in real-time or not.

Typically still, in the method, the notification includes a first notification that includes a message indicating a current location of the tracked person and a second notification that includes an image including a map and graphics indicating the current location of the tracked person.

Typically, yet, in the method, the first notification is displayed at the notification destination with a selectable element, which when selected causes the second notification to be displayed at the notification destination, and the second notification is displayed at the notification destination with a selectable element, which when selected, causes the first notification to be displayed at the notification destination.

The invention further relates to a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 illustrates a block diagram of circuits of an electronic receipt server and an electronic receipt system which includes the electronic receipt server.
FIG. 2 illustrates a diagram of a data record included in a receipt database.
FIG. 3 illustrates a diagram of a data record included in a store database.
FIG. 4 illustrates a diagram of a data record included in a member database.
FIG. 5 illustrates a flowchart of information processing performed by a processor of an individual tracking system according to an embodiment.
FIG. 6 illustrates one example of a notification screen.
FIG. 7 illustrates a flowchart of the information processing performed by the processor when a watcher logs into the individual tracking system according to the embodiment.
FIG. 8 illustrates a flowchart of the information processing performed by the processor when the watcher switches between notification screens.
FIG. 9 illustrates a diagram of a final store screen that is accessible from the notification screen.
FIG. 10 illustrates a diagram of a list screen that is accessible from the notification screen.
FIG. 11 illustrates a diagram of a receipt screen as an example of a notification screen.
FIG. 12 illustrates a diagram of a map screen as an example of a notification screen.

### DETAILED DESCRIPTION

Embodiments provide an individual tracking system, which enables a target person to be tracked even when the target person does not carry a special device, and a notification method.

According to an embodiment, a tracking system includes a plurality of point-of-sale (POS) terminals distributed across a number of different locations, and a server connected to the POS terminals and having a processor configured to determine a location of a tracked person as a location of at least one of the POS terminals that processed a transaction by the tracked person, and to send a notification to a notification destination corresponding to the tracked person, the notification including the determined location of the tracked person.

Hereinafter, an example of the embodiment will be described with reference to the accompanying drawings. Meanwhile, in the embodiment, an electronic receipt server, which has a function as an information processing apparatus that enables a target person to be tracked, will be described as an example. Meanwhile, the function of the electronic receipt server is useful, if a person other than the target person utilizes the function to track the target person. Hereinafter, the target person is referred to as a "watching target person." In addition, a person who is checking the track of the target person is referred to as a "watcher."

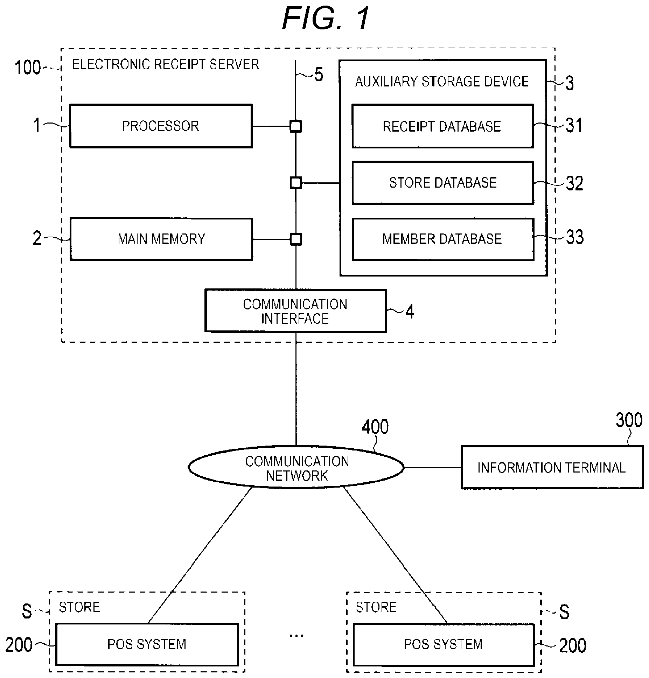

FIG. 1 is a block diagram of circuits of an electronic receipt server 100 according to the embodiment and an electronic receipt system which includes the electronic receipt server 100.

The electronic receipt system includes the electronic receipt server 100, a plurality of POS systems 200, and an information terminal 300, which are capable of performing communication with each other via a communication network 400.

The electronic receipt server 100 performs information processing in order to provide an electronic receipt service, and a watching service, which will be described later, via the communication network 400.

The plurality of POS systems 200 are respectively provided in a plurality of stores S which are different from each other. The POS system 200 acquires and manages transaction data, which indicates content of transaction in the store S, settlement data, which is relevant to settlement of the transaction, and the like. With regard to a transaction performed with a customer who is a member of an electronic receipt service provided by the electronic receipt server 100, the POS system 200 makes an electronic receipt data registration request to the electronic receipt server 100 together with notification of the transaction data, the settlement data, and the like. The POS system 200 may use a conventional system applicable for the electronic receipt service, without making any changes. Here, details of the POS system 200 will not be described.

The information terminal 300 is an information processing apparatus which can be used by a member of the electronic receipt service and which accesses the electronic receipt server 100 via the communication network 400 to function as a client. The information terminal 300 may be connected to the communication network 400 through any one of wired communication and wireless communication. It is possible to apply various existing apparatuses, such as a smart phone, a tablet terminal, a mobile phone apparatus, and a personal computer, as the information terminal 300. Here, details of the information terminal 300 will not be described.

Typically, the communication network 400 is a combination of a mobile communication network and the Internet. However, the communication network 400 may be a combination of a wireless LAN and a Virtual Private Network (VPN).

The electronic receipt server 100 includes a processor 1, a main memory 2, an auxiliary storage device 3, a communication interface 4, and a transmission path 5. The processor 1, the main memory 2, the auxiliary storage device 3, and the communication interface 4 are connected via the transmission path 5.

In the electronic receipt server 100, a computer which controls the electronic receipt server 100 includes the processor 1, the main memory 2, and the auxiliary storage device 3, which are connected to each other via the transmission path 5.

The processor 1 corresponds to a central part of the computer. The processor 1 controls respective units, which realize various functions as the electronic receipt server 100, according to an operating system and an application program.

The main memory 2 corresponds to a main storage part of the computer. The main memory 2 includes a non-volatile memory area and a volatile memory area. The main memory 2 stores the operating system and the application program in the non-volatile memory area. In addition, there is a case where the main memory 2 stores data, which is necessary for the processor 1 to perform a process for controlling the respective units, in the non-volatile memory area or the volatile memory area. The main memory 2 uses the volatile memory area as a work area which has data that is appropriately rewritten by the processor 1.

The auxiliary storage device 3 corresponds to an auxiliary storage part of the computer. It is possible to use, for example, an Electric Erasable Programmable Read-Only Memory (EEPROM), a Hard Disc Drive (HDD), a Solid State Drive (SSD), and other various well-known storage devices as the auxiliary storage device 3. The auxiliary storage device 3 preserves data used to perform various processes by the processor 1 and data generated due to the processes performed by the processor 1. There is a case where the auxiliary storage device 3 stores the application program.

The communication interface 4 performs data communication via the communication network 400. It is possible to use, for example, a well-known interface, which performs a well-known process for data communication via the Internet, as the communication interface 4.

The transmission path 5 includes an address bus, a data bus, a control signal line, and the like, and transmits data and control signals which are transmitted and received between the respective units which are connected to each other.

Furthermore, a part of a storage area of the auxiliary storage device 3 is used as a receipt database 31, a store database 32, and a member database 33. The receipt database 31 stores various pieces of information used to provide the electronic receipt service to the member of the electronic receipt service. The store database 32 stores various pieces of information corresponding to the respective stores S which include the POS systems 200. The member database 33 stores various pieces of information corresponding to the member of the electronic receipt service.

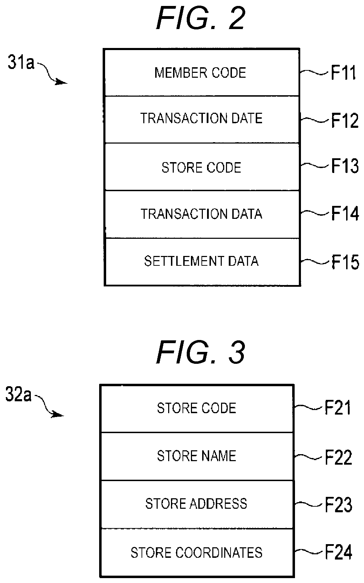

FIG. 2 illustrates a diagram of a data record included in the receipt database 31.

The receipt database 31 includes a set of transaction records 31a which are data records as illustrated in FIG. 2.

The transaction record 31a corresponds to each of the transactions which are performed by the member of electronic receipt service in the store S. The transaction record 31a includes fields F11, F12, F13, F14, and F15. Data of the field F11 shows a member code used to identify a member who performs a transaction. Data of the field F12 shows a date on which the transaction is performed. Data of field F13 indicates a store code used to identify a store S at which the transaction is performed. Data of the field F14 includes, for example, a commodity code corresponding to a transacted commodity, a commodity name, a unit price, quantity, and the like. That is, the data of the field F14 is transaction data which shows content of the transaction. Data of the field F15 includes, for example, subtotal amount, tax amount, total amount, change amount, a settlement method, and the like. That is, the data of the field F15 is settlement data corresponding to settlement of the transaction. Meanwhile, the transaction record 31a may include other data.

FIG. 3 illustrates a diagram of a data record included in the store database 32.

The store database 32 includes a set of store records 32a which are data records as illustrated in FIG. 3.

The store record 32a corresponds to each of the plurality of stores S. The store record 32a includes fields F21, F22, F23, and F24. Data of the field F21 shows a store code used to identify a store S. Data of the field F22 shows a store name used to identify the store S. Data of the field F23 shows a store address which indicates a location of the store S. Data of the field F24 shows store coordinates which indicate the location of the store S. Although the store coordinates typically include longitude and latitude, the store coordinates may comply with another coordinate system.

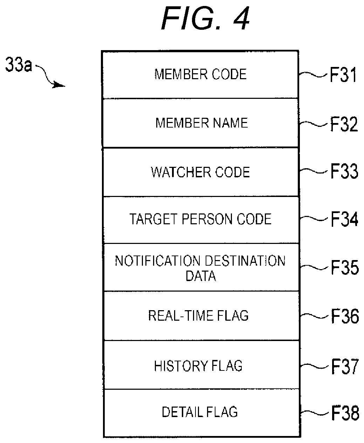

FIG. 4 illustrates a diagram of a data record included in the member database 33.

The member database 33 includes a set of member records 33a which are the data records as illustrated in FIG. 4.

The member record 33a corresponds to each of a plurality of members. The member record 33a includes fields F31, F32, F33, F34, F35, F36, F37, and F38. Data of the field F31 shows a member code used to identify a member. Data of the field F32 shows a member name used to identify the member. Data of the field F33 shows a member code of the watcher as a watcher code when the identified member is the watching target person. Data of field F33 is set to invalid data when the identified member is not the watching target person. Data of the field F34 shows the member code of the watching target person as a target person code when the identified member is the watcher. Data of the field F34 is set to invalid data when the identified member is not the watcher. Data of the field F35 shows, for example, a terminal code or a mail address used to identify the information terminal 300. That is, data of the field F35 is notification destination data which shows a notification destination with respect to the watcher. Data of the field F36 shows a real-time flag which indicates setting of whether or not a notification is provided in real time to the member who is identified using the member code indicated by the data of the field F33. Data of the field F37 shows a history flag which indicates setting of whether or not to permit the member, identified using the member code indicated by the data of the field F33, to read history of transactions performed by the identified member. Data of the field F38 shows a detailed flag which indicates setting of whether or not to permit the member, identified using the member code indicated by the data of the field F33, to read details of a transaction performed by the identified member.

It is possible to realize the electronic receipt server 100 by writing the application program in the main memory 2 or the auxiliary storage device 3 using, for example, a general-purpose computer apparatus for server as hardware. Meanwhile, the application program may be stored in the main memory 2 or the auxiliary storage device 3 when the electronic receipt server 100 is delivered as a product, or may be delivered separately from the general-purpose computer apparatus. In the latter case, the application program is delivered after being recorded in a removable recording medium, such as a magnetic disk, a magneto-optic disk, an optical disk, and a semiconductor memory, or is delivered via a network.

Subsequently, an operation of the electronic receipt system will be described. Content of various processes which will be described below is an example, and it is possible to appropriately apply various processes to obtain similar results.

A watching service in the electronic receipt system according to the embodiment sets a user of the electronic receipt service as a watching target person. In addition, the watcher is also set as a user of the electronic receipt service. Therefore, the member database 33 includes the member records 33a respectively corresponding to the watching target person and the watcher. Furthermore, in the member record 33a corresponding to the watching target person, the member code of the watcher is stored in the field F33, and invalid data is stored in the field F34. In addition, when the watcher desires push-notification, the terminal code of the information terminal 300, which receives the push-notification, is stored in the field F35. When the watcher desires mail notification, a mail address, which is a transmission destination of an electronic mail for the notification, is stored in the field F35. In addition, in the fields F36, F37, and F38, states of the respective flags are set, for example, according to determination performed by an electronic receipt service provider while taking a relationship between the watching target person and the watcher into consideration, or according to the desire of the member. Meanwhile, as an example of a watching target person or a watcher, the watching target person is an elderly person and the watcher is a family member of the elderly person.

In the POS system 200, when registration and settlement of the content of the transaction corresponding to the member are completed, the electronic receipt data registration request is made to the electronic receipt server 100, together with the notification of the member code, the transaction date, the store code, the transaction data, and the settlement data.

When the electronic receipt server 100 is in a normal operation state, the processor 1 performs the information processing based on the application program stored in the main memory 2 or the auxiliary storage device 3.

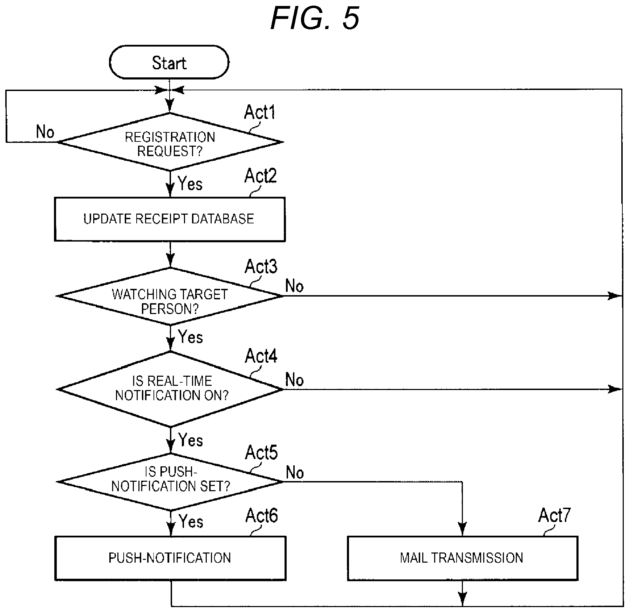

FIG. 5 illustrates a flowchart of the information processing performed by the processor 1.

In Act1, the processor 1 waits for any one of the POS systems 200 to make a registration request. Furthermore, when the registration request is made as described above, the processor 1 makes a determination of Yes and proceeds to Act2.

In Act2, the processor 1 updates the receipt database 31 so as to include new transaction record 31a which includes various data notified together with the registration request.

In Act3, the processor 1 checks whether or not a member who is identified by the member code notified together with the registration request is the watching target person. That is, the processor 1 checks whether or not the member who performs a transaction (hereinafter, referred to as a transaction member) is the watching target person. Specifically, the processor 1 acquires the member record (here, referred to as a target person record) 33a, in which the notified member code is stored in the field F31, from the member database 33. Furthermore, the processor 1 checks whether or not a valid member code is stored in the field F33 of the target person record 33a. Furthermore, when the processor 1 checks that the valid member code is stored, the processor 1 makes a determination of Yes and proceeds to Act4. As described above, when the processor 1 receives the registration request together with the notification of the member code of the watching target person, the processor 1 detects that the watching target person uses the store S identified by the store code which is notified together with the registration request. Thus, when the processor 1 performs the information processing based on the application program, a computer which includes the processor 1 as the central part functions as the detection unit. Meanwhile, when the processor 1 checks that the valid member code is not described, the processor 1 makes a determination of No in Act3 and returns to a waiting state in Act1.

In Act4, the processor 1 checks whether or not setting is performed such that a real-time notification is ON with respect to a member who watches the transaction member. Specifically, the processor 1 acquires another member record (here, referred to as a watcher record) 33a, in which the data of the field F34 of the member record 33a shows the member code of the transaction member, from the member database 33. Furthermore, when the real-time flag of the field F36 of the watcher record 33a shows setting in which a notification corresponding to the watching target person is provided in real time, the processor 1 makes a determination of Yes and proceeds to Act5. Meanwhile, when the real-time flag shows setting in which the notification is not provided in real time, the processor 1 makes a determination of No in Act4 and returns to the waiting state in Act1.

In Act5, the processor 1 checks whether or not the push-notification is set with respect to the watcher. Specifically, the processor 1 checks whether or not the data of the field F35 of the watcher record 33a acquired in Act4 shows the terminal code. Furthermore, when the corresponding data shows the terminal code, the processor 1 makes a determination of Yes and proceeds to Act6.

In Act6, the processor 1 provides the push-notification to the information terminal 300 identified by the terminal code shown in the data of the field F35 of the watcher record 33a. The push-notification informs the watcher of the store S where the transaction member performs the transaction.

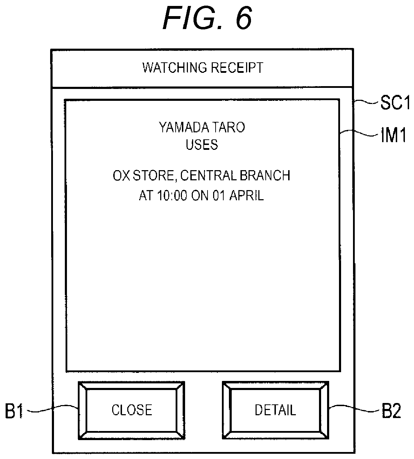

FIG. 6 illustrates a diagram of a notification screen SC1 displayed on the information terminal 300 based on the push-notification as an example.

The notification screen SC1 shows a message image IM1 and buttons B1 and B2.

The message image IM1 includes character strings "Yamada Taro", "at 10:00 on 01 April", "OX store, central branch", and "uses."

The character string "Yamada Taro" is the member name shown in the field F32 of the target person record 33a. The character string "at 10:00 on 01 April" is the transaction date and time notified together with the registration request. The character string "OX store, central branch" is the store name shown in the field F22 of the store record 32a in association with the store code notified together with the registration request. Since the character string "OX store, central branch", that is, the store name is one piece of information capable of specifying the stopover destination of the watching target person, the character string "OX store, central branch" is an example of the stopover destination information which indicates the stopover destination of the watching target person. Furthermore, transmission of the notification screen, which includes the information, to the information terminal 300 of the watcher who is associated with the watching target person corresponds to notification of the stopover destination information to the notification destination predetermined in association with the watching target person. Thus, when the processor 1 performs the information processing based on the application program, the computer, which includes the processor 1 as the central part, functions as a notification unit which performs the notification.

The buttons B1 and B2 are Graphical User Interfaces (GUIs) to be designated to finish display of the notification screen SC1 or to display details of the transaction. Meanwhile, the message image IM1 can be replaced with another message image in a notification screen other than the notification screen SC1. However, the buttons B1 and B2 are shown in all notification screens in common.

When the data of the field F35 of the watcher record 33a shows a mail address, the processor 1 makes a determination of No in Act5 and proceeds to Act7.

In Act7, the processor 1 transmits an electronic mail to a mail address shown by the data of the field F35 of the watcher record 33a. For example, the processor 1 causes a body of the electronic mail to include the same character strings, which are displayed in the message image IM1, and also to include a link for requesting the electronic receipt server 100 to provide a screen to display the details of the transaction.

When Act6 or Act7 are finished, the processor 1 returns to the waiting state in Act1 and prepares for another registration request.

However, when the electronic receipt server 100 is in the normal operation state, the processor 1 performs the information processing, which is different from the information processing illustrated in Fig. 5, in parallel based on the application program stored in the main memory 2 or the auxiliary storage device 3.

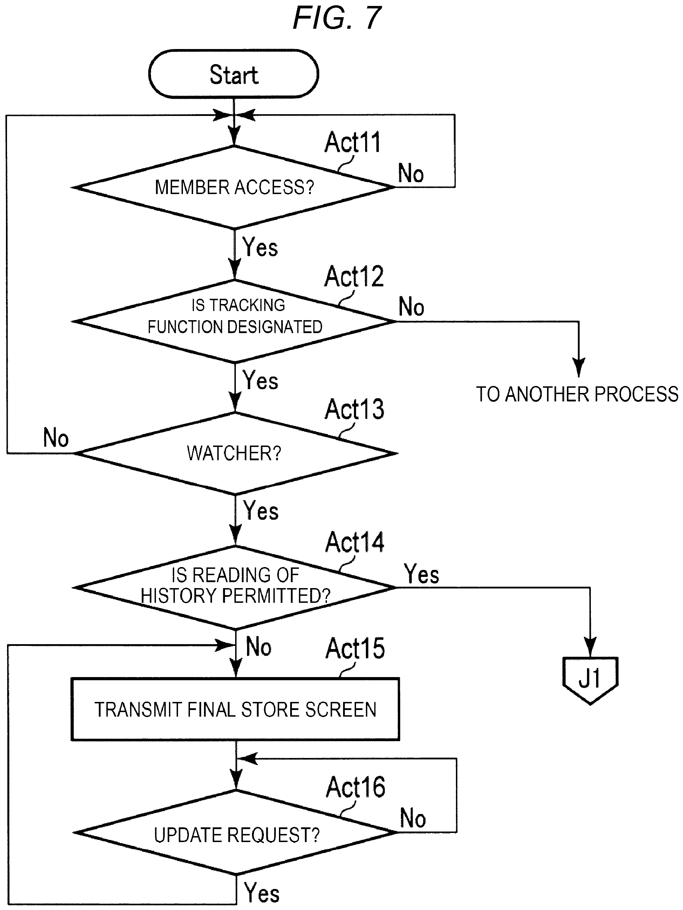

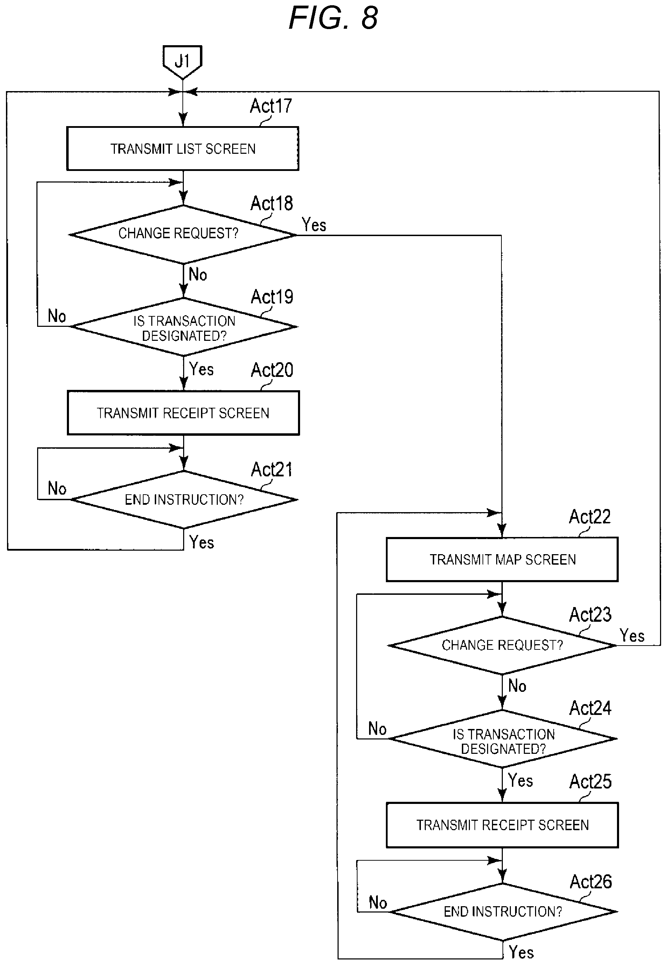

FIG. 7 and FIG. 8 illustrate flowcharts of the information processing performed by the processor 1.

In Act11, the processor 1 waits for web access to be performed by a member. Furthermore, when the processor 1 receives the web access from an information terminal 300 and determines that an accessor is a member of the electronic receipt service, the processor 1 makes a determination of Yes and proceeds to Act12. Meanwhile, here, the processor 1 controls the information terminal 300 to display an operation screen, which is used to cause the accessor to select some services provided according to the electronic receipt service. One of the services, which can be selected on the operation screen, has a tracking function which enables the watcher to track the watching target person.

A member who desires to track another member using the tracking function performs web access to the electronic receipt server 100 using the information terminal 300, and designates the tracking function in the operation screen. Meanwhile, when the member uses a service other than the tracking function, for example, with the purpose of checking the content of the transaction performed by the member himself or herself, the member designates the service on the operation screen.

In Act12, the processor 1 checks whether or not the accessor designates reading of information according to the tracking function. Furthermore, when the accessor designates a service other than the tracking function, the processor 1 makes a determination of No and proceeds to performing another process other than the process of the tracking function, according to the designated service. Since the process is not a feature of the embodiment, the process will not be described. In contrast, when the accessor designates the tracking function, the processor 1 makes a determination of Yes and proceeds to Act13.

In Act13, the processor 1 checks whether or not the accessor is the watcher. Specifically, the processor 1 searches the member database 33 for the member record 33a which has the data of the field F33 that coincides with the member code of the accessor. When the corresponding member record 33a exists, the processor 1 determines that the accessor is the watcher. When the corresponding member record 33a does not exist, the processor 1 returns to a waiting state in Act11 and prepares for another member access. When the corresponding member record 33a exists, the processor 1 makes a determination of Yes in Act13 and proceeds to Act14. Meanwhile, when the processor 1 makes a determination of No in Act13 and returns to the waiting state in Act11, the processor 1 may cause the information terminal 300 to display that it is not possible for the accessor to use the tracking function. In another way, when the accessor is not a watcher, the processor 1 may not enable the tracking function to be designated in the operation screen and may not perform the process in Act13.

Meanwhile, when an operation of pressing the button B2 in the notification screen is performed in the information terminal 300 based on the above-described push-notification, the information terminal 300 performs web access to the electronic receipt server 100 together with the push-notification. In addition, when an operation of clicking the link included in the above-described electronic mail is performed in the information terminal 300, the information terminal 300 performs web access to the electronic receipt server 100 based on the link. When the web access is performed, the processor 1 makes a determination of Yes in all of Act11, Act12, and Act13, and proceeds to Act14.

In Act14, the processor 1 checks whether or not reading of the history by the accessor is permitted. Specifically, the processor 1 checks whether or not the history flag of the field F37 of the member record (here, referred to as a target person record) 33a, which has the data of the field F33 that coincides with the member code of the accessor, is in a state which indicates permission. Furthermore, when the reading of the history is not permitted, the processor 1 makes a determination of No and proceeds to Act15.

In Act15, the processor 1 transmits a final store screen to the information terminal 300 which is an access source. The final store screen is used to inform the watcher of a store S where the most recent transaction among transactions, which are performed by the watching target person and which become the electronic receipt registration targets, is performed. The information terminal 300 displays the final store screen.

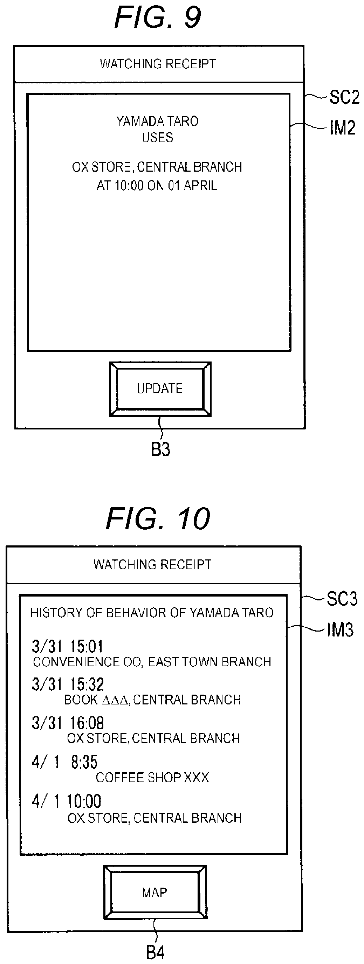

FIG. 9 illustrates a diagram of a final store screen SC2, which is displayed on the information terminal 300, as an example.

The final store screen SC2 shows a message image IM2 and a button B3.

The message image IM2 includes character strings "Yamada Taro", "at 10:00 on 01 April", "OX store, central branch", and "uses."

The character string "Yamada Taro" is the member name shown in the field F32 of the target person record 33a. The character string "at 10:00 on 01 April" is a transaction date shown in the field F12 of the transaction record 31a. The data of the field F11 coincides with the member code shown in the field F31 of the target person record 33a. Meanwhile, when a plurality of transaction records 31a exist, the character string which shows the date is the newest one among the transaction dates shown respectively in the fields F12 of the transaction records 31a. The character string "OX store, central branch" is a store name shown in the field F22 of the store record 32a, which is in association with a store code shown in the field F13 of the transaction record 31a.

When the button B3 is designated, the final store screen SC2 is updated to a store which is most recently used. Meanwhile, the message image IM2 can be replaced by another message image in a final store screen other than the final store screen SC2. However, the button B3 is shown in all final store screens in common.

Meanwhile, when it is permitted that one member becomes a watcher of a plurality of other members, the same member code may be set to the respective fields F33 of the member records 33a corresponding to the plurality of members. Furthermore, in this case, a plurality of target person records 33a may exist. When the plurality of target person records 33a exist, the processor 1 individually generates the final store screens in relation to the respective target person records 33a. Furthermore, the processor 1 sequentially controls to display the plurality of final store screens automatically at regular time intervals or according to an instruction of the accessor. In another way, the processor 1 may control the information terminal 300 to display one final store screen, which shows all pieces of information in relation to the plurality of target person records 33a. In another way, the processor 1 may control the information terminal 300 to display a screen, which shows a list of watching target person corresponding to the plurality of target person records 33a, and may control the information terminal 300 to display the final store screen for the watching target person according to designation of the watching target person by the accessor.

When the accessor desires to update information shown in the final store screen to the newest information, the accessor performs an operation of pressing the button B3 in the information terminal 300. If so, the information terminal 300 makes an update request to the electronic receipt server 100.

In Act16, the processor 1 waits for the update request to be made. Furthermore, when the update request is made as described above, the processor 1 makes a determination of Yes and returns to Act15. Here, the processor 1 re-generates the final store screen by retrieving the most recent state of the receipt database 31, and transmits the final store screen to the information terminal 300, which is a request source. Thus, when the watching target person performs a new transaction together with registration of the electronic receipt, the final store screen, which is displayed on the information terminal 300, is updated such that the store S where the transaction is performed is shown.

When reading of the history by the accessor is permitted, the processor 1 makes a determination of Yes in Act14 and proceeds to Act17 of FIG. 8. Meanwhile, when a plurality of target person records 33a exist, there is a case where a setting in which reading of the history is permitted, and a setting in which reading of the history is not permitted, both exist. In this case, the processor 1 makes a determination of Yes in Act14 when any of the target person records 33a is set such that the reading of the history is permitted. However, in this case, the processor 1 excludes the member record 33a, which is set such that the reading of the history is not permitted, from the target person record 33a, and considers only the target person record 33a, which is set such that the reading of the history is permitted, as the target person record 33a in a subsequent process.

In Act17, the processor 1 transmits a list screen to the information terminal 300 which is the access source. The list screen shows a date and a place where the transaction, which is performed by the watching target person and which is subjected to the electronic receipt registration, is performed as a list. Specifically, the processor 1 extracts the transaction record 31a, which has the data of the field F11 that coincides with the member code of the watching target person, from the receipt database 31, and generates the list screen based on the transaction record 31a. The information terminal 300 displays the list screen.

FIG. 10 illustrates a diagram of a list screen SC3 as an example.

The list screen SC3 shows a list image IM3 and a button B4.

The list image IM3 indicates the list.

The button B4 is a GUI used to receive a request to change the display to a map screen. Meanwhile, the list image IM3 is replaced by another list image in a list screen other than the list screen SC3. However, the button B4 is shown in all list screens in common.

Meanwhile, when a plurality of target persons exist, the processor 1 individually generates the list screens in relation to the respective target persons. Furthermore, the processor 1 sequentially controls the information terminal 300 to display the plurality of list screens automatically at regular time intervals or according to the instruction of the accessor. In another way, the processor 1 may control the information terminal 300 to display a screen which shows a list of the plurality of watching target persons, and may control the information terminal 300 to display the list screen for a watching target person according to designation of any watching target person by the accessor.

In Act18, the processor 1 checks whether or not the change request is made. Specifically, the processor 1 checks whether or not the operation of pressing the button B3 is performed on the information terminal 300. Furthermore, when the operation is not performed, the processor 1 makes a determination of No and proceeds to Act19.

In Act19, the processor 1 checks whether or not the transaction is designated. Specifically, the processor 1 checks whether or not an operation of designating any transaction in the list image IM3 is performed on the information terminal 300. Furthermore, when the operation is not performed, the processor 1 makes a determination of No and returns to Act18.

Thus, in Act18 and Act19, the processor 1 waits for any of the change request and the transaction designation to be performed. When the accessor desires to check details of the transaction performed by the watching target person, the accessor performs an operation of designating one transaction on the information terminal 300 by touching, for example, the character string which shows the transaction date or the character string which shows the store name. When the operation is performed, the information terminal 300 provides a notification that the operation is performed to the electronic receipt server 100. When the notification is performed, the processor 1 makes a determination of Yes in Act19 and proceeds to Act20.

In Act20, the processor 1 transmits a receipt screen, which shows details of the designated transaction, to the information terminal 300 which is the access source. The receipt screen is a screen which shows content of the transaction and a situation of settlement.

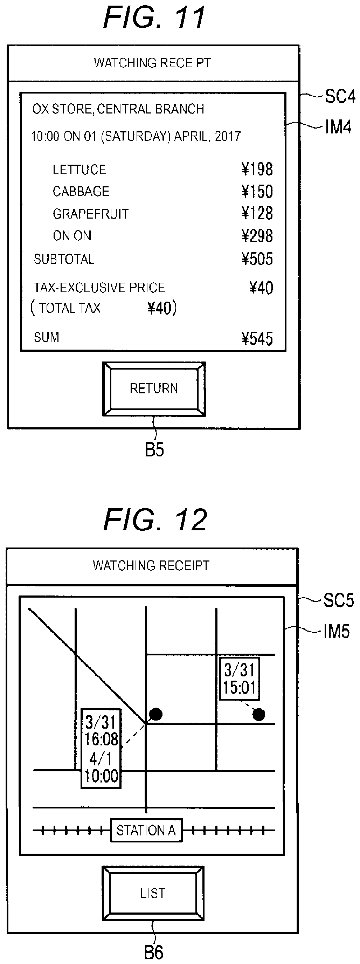

FIG. 11 illustrates a diagram of a receipt screen SC4 as an example.

The receipt screen SC4 shows a receipt image IM4 and a button B5.

The receipt image IM4 shows details of the transaction. The receipt image IM4 may be, for example, an image which is similar to a screen displayed on the information terminal 300 in order to cause the member to check details of a past transaction in a normal electronic receipt service.

The button B5 is a GUI used to receive an instruction to finish display of the receipt screen SC4. Meanwhile, the receipt image IM4 is replaced by another receipt image in a receipt screen other than the receipt screen SC4. However, the button B5 is shown in all receipt screens in common.

In Act21, the processor 1 waits for the finish instruction to be performed. Specifically, the processor 1 waits for an operation of pressing the button B5 to be performed. When the accessor finishes checking of the details of the transaction, the accessor performs the operation of pressing the button B5 in the information terminal 300. When the operation is performed, the processor 1 makes a determination of Yes and returns to Act17. That is, the processor 1 returns the display on the information terminal 300 to the list screen.

When the accessor desires to check the history of transactions of the watching target person in the map, the accessor performs an operation of pressing the button B4 in the information terminal 300. When the operation is performed, the information terminal 300 provides a notification that the operation is performed to the electronic receipt server 100. When the notification is provided, the processor 1 makes a determination of Yes in Act18, and proceeds to Act22.

In Act22, the processor 1 transmits the map screen to the information terminal 300 which is the access source. The map screen shows time and place of the transactions, which are performed by the watching target person and which are subjected to electronic receipt registration, on a map. Specifically, the processor 1 extracts the transaction record 31a, which has data that coincides with the field F11 of the member ID of the watching target person, from the receipt database 31, and generates the map screen based on the transaction record 31a. The information terminal 300 displays the map screen.

FIG. 12 illustrates a diagram of a map screen SC5 as an example.

The map screen SC5 shows a map image IM5 and a button B6.

In the map image IM5, a black dot, which indicates a location of the store S where the transaction is performed, and a character string, which indicates the date corresponding to the transaction performed in the store S, are synthesized and displayed on a map which is prepared in advance. Meanwhile, specifically, the processor 1 extracts the store record 32a, which has the data of the field F21 that coincides with the store code described in the field F13 of the transaction record 31a extracted as described above, from the store database 32. Furthermore, the processor 1 determines a location to be synthesized with the black circle based on the data of the field F23 or F24 of the extracted store record 32a. That is, the data of the field F23 or F24, which is used to determine the location to be synthesized with the black circle, that is, both the store address and the store coordinates are one type of information which enables the stopover destination of the watching target person to be specified, and are examples of the stopover destination information which indicates the stopover destination of the watching target person.

The button B6 is a GUI used to receive a display change request to the list screen. Meanwhile, the map image IM5 may be replaced by another map image in a map screen other than the map screen SC5. However, the button B6 is shown in all map screens in common.

Both the above-described list screen and the map screen correspond to history information which indicates history of detection for the use of the facility by one watching target person. Thus, when the processor 1 performs the information processing based on the application program, the computer which includes the processor 1 as the central part functions as a generation unit which generates the history information.

In Act23, the processor 1 checks whether or not the change request is made. Specifically, the processor 1 checks whether or not an operation of pressing the button B6 is performed in the information terminal 300. Furthermore, when the operation is not performed, the processor 1 makes a determination of No and proceeds to Act24.

In Act24, the processor 1 checks whether or not the transaction designation is performed. Specifically, the processor 1 checks whether or not an operation of designating any one of the transactions is performed in the map image IM5 on the information terminal 300. Furthermore, when the operation is not performed, the processor 1 makes a determination of No and returns to Act23.

Thus, in Act23 and Act24, the processor 1 waits for any one of the change request and the transaction designation to be performed. When the accessor desires to check details of the transaction performed by the watching target person, the accessor performs an operation of designating one transaction by touching, for example, a character string which shows the transaction date on the information terminal 300. When the operation is performed, the processor 1 makes a determination of Yes in Act24 and proceeds to Act25.

In Act25, the processor 1 transmits the receipt screen to the information terminal 300, which is the access source, like Act20.

In Act26, the processor 1 waits for the finish instruction to be provided. When the accessor finishes checking the details of the transaction, the accessor performs an operation, which is the same as the above-described operation, on the information terminal 300. When the operation is performed, the information terminal 300 provides a notification that the operation is performed to the electronic receipt server 100. When the notification is provided, the processor 1 makes a determination of Yes and returns to Act22. That is, the processor 1 returns the display on the information terminal 300 to the map screen.

When the accessor desires to check the history of transactions, which are performed by the watching target person, using the list screen, the accessor performs the operation of pressing the button B6 on the information terminal 300. When the operation is performed, the information terminal 300 provides a notification that the operation is performed to the electronic receipt server 100. When the notification is provided, the processor 1 makes a determination of Yes in Act23 and returns to Act17. That is, the processor 1 returns the display on the information terminal 300 to the list screen.

Meanwhile, when a finish request is made from the information terminal 300 in accordance with a predetermined finish operation on the information terminal 300 in any one of stages of the information processing illustrated in FIG. 7 and FIG. 8, the processor 1 finishes the information processing illustrated in FIG. 7 and FIG. 8.

As described above, according to the electronic receipt server 100, when the watching target person performs the transaction in the store S, it is possible for the watcher to check the store S in which the transaction is performed. For example, when the watching target person uses the store S outside the normal tracking range, it is possible for the watcher to recognize the case as an abnormal behavior of the watching target person outside the normal tracking range. In addition, for example, when the watching target person uses the store S which is normally not used by the watching target person, it is possible for the watcher to recognize the case as the abnormal behavior of the watching target person. On the contrary, when the watcher recognizes that the behavior of the watching target person is normal, it is possible for the watcher to be relieved. In this manner, it is possible for the electronic receipt server 100 to support the watcher to watch the watching target person.

Furthermore, upon the notification of the member code of the watching target person, which is acquired in the POS system 200 of the store S, the electronic receipt server 100 detects use of the store S by the watching target person, and notifies the watcher of the store S as the stopover destination. According to the above embodiment, it is not necessary for the watching target person to carry a device, such as the GPS terminal, for detecting a location of the watching target person himself or herself. In addition, the electronic receipt server 100 detects the use of the store S by the watching target person using the registration request in the electronic receipt system, and thus it is possible to effectively use and simply realize the existing electronic receipt system.

In addition, when the electronic receipt server 100 detects the use of the store S by the watching target person, the electronic receipt server 100 performs the push-notification or the notification through mail transmission. Accordingly, the use of the store S by the watching target person is notified to the watcher in real time. Accordingly, it is possible for the watcher to rapidly recognize the abnormal behavior of the watching target person. In addition, it is possible for the watcher to specify a location, in which the watching target person exists immediately before, based on the notification, and thus it is possible for the watcher to easily estimate a current location of the watching target person.

In addition, the electronic receipt server 100 notifies the watcher of the history information, which indicates the history of detection for the use of the store by one watching target person, as the list screen or the map screen. Therefore, it is possible for the watcher to check the history of the use of the store by the watching target person, and thus it is possible to track the watching target person in detail. Meanwhile, the electronic receipt server 100 determines whether or not to notify the watcher of the list screen or the map screen according to the setting for each member who is the watching target person. Therefore, only when there is a high necessity to watch the watching target person, the history can be permitted to be checked, and thus it is possible to prevent privacy of the watching target person from being unnecessarily invaded.

In addition, the electronic receipt server 100 notifies of the details of the transaction performed by the watching target person as the receipt screen. Therefore, it is possible for the watcher to track the watching target person associated with the transaction performed by the watching target person. For example, it is possible for the watcher to check an inappropriate transaction as when the watching target person purchases an expensive commodity or when the watching target person who is a person under age purchases an alcoholic beverage, a cigarette, or the like. Meanwhile, the electronic receipt server 100 determines whether or not to notify the watcher of the receipt screen according to the setting for each member who is the watching target person. Therefore, only when there is a high necessity to watch the watching target person, the details can be permitted to be checked, and thus it is possible to prevent privacy of the watching target person from being unnecessarily invaded.

It is possible to modify the embodiment in various manners as below.

A facility, the use of which by the watching target person is detected, is not limited to the store S. For example, a station or a library, may be used. In a case of the station, entrance and exit using a season ticket or electronic money may be detected as the use of the facility. In a case of the library, a procedure performed for borrowing a book may be detected as the use of the facility.

In the notification screen or the list screen, the store address may be shown instead of the store name or in addition to the store name. That is, the information, which is notified as the stopover destination information, may be any information if it is possible for the watcher to recognize the stopover destination of the watching target person.

The information processing apparatus may be realized as an apparatus which is different from the electronic receipt server which provides the watching service in cooperation with another existing electronic receipt server. In another way, for example, when use of the station is detected with entrance and exit of the station as described above, a server apparatus, which manages the entrance and exit, may include the function of the information processing apparatus. That is, the information processing apparatus may be realized in an apparatus other than the electronic receipt server.

A part of the above-described information processing performed by the processor 1 may be omitted. For example, Act4 may be omitted and notification may be certainly performed if a determination of Yes is made in Act3. In addition, for example, Act5 may be omitted and only one of Act6 and Act7 may be performed. In addition, for example, Act14 may be omitted and the process may proceed to Act17 if a determination of Yes is made in Act13. In addition, for example, Act18 and Act22 to Act26 may not be performed. In addition, for example, Act17 to Act21 and Act23 may not be performed. In addition, for example, Act19 to Act21 may not be performed. In addition, for example, Act24 to Act26 may not be performed.

It is possible to realize a part or entirety of respective functions, which are realized by the processor 1 by performing the information processing, by hardware, such as a logic circuit, which performs information processing which is not based on a program. In addition, it is possible to realize the respective functions by combining the hardware, such as the logic circuit, with software control.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A tracking system comprising:
a plurality of point-of-sale (POS) terminals distributed across a number of different locations; and
a server connected to the POS terminals and having a processor configured to determine a location of a tracked person as a location of at least one of the POS terminals that processed a transaction by the tracked person, and to send a notification to a notification destination corresponding to the tracked person, the notification including the determined location of the tracked person.

2. The system according to claim 1, wherein
the processor is configured to generate a history of determined locations for the tracked person,
wherein the notification includes the history of the determined locations for the tracked person.

3. The system according to claim 2, wherein the processor is configured to generate the history of the determined locations for the tracked person as an image including a map and graphics indicating a path of the tracked person.

4. The system according to any one of claims 1 to 3, wherein the server is an electronic receipt server.

5. The system according to claim 4, wherein the electronic receipt server specifies one or more user IDs of individuals who are to be tracked, and associates a notification destination for each of the user IDs.

6. The system according to claim 4 or 5, wherein the electronic receipt server maintains a setting for each of the specified user IDs that indicates whether or not the notification is to be made in real-time or not.

7. The system according to any one of claims 1 to 6, wherein the notification includes a first notification that includes a message indicating a current location of the tracked person and a second notification that includes an image including a map and graphics indicating the current location of the tracked person.

8. A notification method in a tracking system comprising a plurality of point-of-sale (POS) terminals distributed across a number of different locations, and a server connected to the POS terminals, the method comprising steps of:
determining a location of a tracked person as a location of at least one of the POS terminals that processed a transaction by the tracked person; and
sending a notification to a notification destination corresponding to the tracked person, the notification including the determined location of the tracked person.

9. The method according to claim 8, further comprising:
generating a history of determined locations for the tracked person,
wherein the notification includes the history of the determined locations for the tracked person.

10. The method according to claim 9, wherein the history of the determined locations for the tracked person is generated as an image including a map and graphics indicating a path of the tracked person.

11. The method according to any one of claims 8 to 10, wherein the server is an electronic receipt server.

12. The method according to claim 11, wherein the electronic receipt server specifies one or more user IDs of individuals who are to be tracked, and associates a notification destination for each of the user IDs.

13. The method according to claim 11 or 12, wherein the electronic receipt server maintains a setting for each of the specified user IDs that indicates whether or not the notification is to be made in real-time or not.

14. The method according to any one of claims 8 to 13, wherein the notification includes a first notification that includes a message indicating a current location of the tracked person and a second notification that includes an image including a map and graphics indicating the current location of the tracked person.

15. A non-transitory computer readable medium storing a program causing a computer to execute the method according to any one of claims 8 to 14
